# FASCICULE DE BREVET EUROPEEN

(11) **EP 2 753 656 B1**
(45) Date de publication et mention de la délivrance du brevet: **04.11.2015**
(21) Numéro de dépôt: 12773016.6
(22) Date de dépôt: 05.09.2012
(51) Int. Cl.: C08J 5/22, C08F 293/00, H01M 10/0565, H01M 10/0525, H01M 4/13

(54) **COPOLYMERES A BLOCS DONT UN POLYANIONIQUE BASE SUR UN MONOMERE ANION DE TYPE TFSILi COMME ELECTROLYTE DE BATTERIE**
BLOCKCOPOLYMER MIT EINEM POLYANION AUF BASIS EINES TFSILI-ANIONEN-MONOMERS ALS BATTERIEELEKTROLYT
BLOCK COPOLYMER INCLUDING A POLYANION BASED ON A TFSILI ANION MONOMER AS A BATTERY ELECTROLYTE

(30) Priorité: 05.09.2011 FR 1157841
(43) Date de publication de la demande: 16.07.2014
(73) Titulaire: Université d'Aix Marseille, 13284 Marseille Cedex 07 (FR)
(72) Inventeur: BOUCHET, Renaud, F-38700 La Tronche (FR); ABOULAICH, Abdelmaula, 93000 Tetouan (MA); MARIA, Sébastien, F-13240 Septemes-les-Vallons (FR); PHAN, Trang, F-13009 Marseille (FR); GIGMES, Didier, F-13190 Allauch (FR); BERTIN, Denis, F-13013 Marseille (FR); MEZIANE, Rachid, F-59390 Lys-les-Lannoy (FR); BONNET, Jean-Pierre, F-75116 Paris (FR); ARMAND, Michel, F-75014 Paris (FR)
(74) Mandataire: Goulard, Sophie
(86) Numéro de dépôt international: PCT/FR2012/051982
(87) Numéro de publication internationale: WO 2013/034848

(56) Documents cités:
- RACHID MEZIANE ET AL: "Single-ion polymer electrolytes based on a delocalized polyanion for lithium batteries", ELECTROCHIMICA ACTA, ELSEVIER SCIENCE PUBLISHERS, BARKING, GB, vol. 57, 17 mars 2011 (2011-03-17), pages 14-19, XP028124235, ISSN: 0013-4686, DOI: 10.1016/J.ELECTACTA.2011.03.074 [extrait le 2011-03-24]
- TAKESHI NIITANI ET AL: "Star-Shaped Polymer Electrolyte with Microphase Separation Structure for All-Solid-State Lithium Batteries", JOURNAL OF THE ELECTROCHEMICAL SOCIETY, vol. 156, no. 7, 1 janvier 2009 (2009-01-01), page A577, XP055036548, ISSN: 0013-4651, DOI: 10.1149/1.3129245

## Description

La présente invention concerne un copolymère à blocs de type BA ou BAB, A étant un bloc de type oxyde d'éthylène ou dérivé et B un bloc polymère anionique à base de bis(trifluorométhylsulfonyl)imide de lithium, un procédé pour sa préparation, ainsi que ses utilisations, notamment pour la préparation d'une composition d'électrolyte pour batteries Lithium Métal Polymère (LMP).

Elle s'applique au domaine de la fabrication des batteries Lithium Métal Polymère. Ce type de batterie se présente sous forme d'un assemblage de films minces enroulés (enroulement du motif suivant {électrolyte / cathode / collecteur / cathode / électrolyte / lithium} sur n tours ou de n films minces empilés (coupés et superposés, soit n empilements du motif précité). Ce motif unitaire empilé / complexé a une épaisseur de l'ordre d'une centaine de micromètres. 4 feuilles fonctionnelles entrent dans sa composition : i) une électrode négative (anode) généralement constituée d'une feuille de lithium métallique ou d'un alliage de lithium, ii) un électrolyte composé d'un polymère (généralement à base de poly(oxyde d'éthylène) (POE)) et de sels de lithium, iii) une électrode positive (cathode) composée d'un matériau actif d'électrode dont le potentiel de travail est inférieur à 4V vs Li⁺/Li, par exemple à base d'oxyde de métal ou à base de phosphate de type LiMPO₄ où M représente un cation métal sélectionné parmi le groupe Fe, Mn, Co, Ni et Ti, ou de combinaisons de ces cations, comme par exemple LiFePO₄, de carbone et de polymère, et enfin iv) un collecteur de courant généralement constitué d'une feuille de métal et permettant d'assurer la connexion électrique.

Les polymères entrant dans la composition des électrolytes doivent allier de bonnes propriétés de conductivité ionique et de bonnes propriétés mécaniques d'élasticité et de plasticité afin de pouvoir être utilisés de façon satisfaisante dans les batteries LMP.

Les électrolytes polymères solides présentent de nombreux avantages à savoir la stabilité thermique élevée, l'amélioration de la sécurité, la conception de batterie fines, flexibles et de formes variée, le faible coût du matériau et de sa mise en oeuvre. De plus, les polymères électrolytes solides permettent d'utiliser le lithium métal comme anode offrant des densités d'énergie plus élevées que les anodes lithium ions. Les électrolytes polymères sont également très intéressants du fait de leur faible réactivité vis-à-vis du lithium métal et de leur potentiel à bloquer la croissance des dendrites. Cependant, en dépit de ces nombreux avantages, l'essor des électrolytes polymères a été réfréné par l'incapacité à développer un électrolyte qui possède à la fois une conductivité ionique élevée et une bonne tenue mécanique. Ces difficultés résident dans le fait que la conductivité élevée nécessite une grande mobilité des chaînes polymères qui a pour effet inverse de produire des polymères de faible résistance mécanique.

Différents types de polymères ont déjà été proposés dans la littérature. Il est notamment largement connu, depuis la fin des années 1970, d'utiliser des polymères constitués de motifs d'oxyde d'éthylène (OE), cependant il s'avère qu'ils ne présentent pas une conductivité suffisante à température ambiante. Par exemple, le poly(oxyde d'éthylène) (POE) de haute masse moléculaire dopé au sel de lithium possède de très bonnes propriétés mécaniques à température ambiante mais est également un polymère semi-cristallin. La structure cristalline restreint la mobilité des chaînes et diminue la conductivité ionique du polymère. Au-dessus de la température de fusion du POE (T_{f} ~ 60-65°C), la conductivité ionique augmente considérablement, mais à ces températures, le POE devient un liquide visqueux et perd sa stabilité dimensionnelle.

Depuis, la recherche et le développement d'électrolytes polymères solides possédant une conductivité ionique améliorée ainsi que de bonnes propriétés mécaniques, en particulier une bonne flexibilité se sont poursuivis. Les tentatives de renforcement des propriétés mécaniques du POE par addition de particules colloïdales dures, par augmentation de la masse moléculaire moyenne en nombre du POE ou par la réticulation ont souvent causées une diminution de la conductivité ionique. De manière similaire, les essais d'amélioration de la conductivité du POE par ajout de plastifiants ont conduit à détériorer les propriétés mécaniques.

Afin d'augmenter la conductivité ionique de la matrice de POE des électrolytes polymères solides, il a également été envisagé dans la littérature, de copolymériser des macromères de POE ou d'élaborer des copolymères séquencés ou à blocs à base de POE. C'est sur cette dernière stratégie que les recherches les plus importantes ont été menées grâce au développement important des techniques de polymérisation radicalaire contrôlée telles que l'ATRP (acronyme de l'expression anglaise « *Atom Transfer Radical Polymerization* »).

Les copolymères à bloc de POE utilisés dans les électrolytes polymères solides peuvent être des copolymères di-blocs A-B ou des copolymères tri-blocs A-B-A.

Il a par exemple été proposé, notamment par Sadoway D.R. (J. Power Sources, 2004, 129, 1-3), des copolymères diblocs dans lesquels le premier bloc est un poly(méthacrylate d'alkyle), notamment le poly(méthacrylate de lauryle) (PLMA), le poly(méthacrylate de n-butyle) (PnMBA), ou le poly(méthacrylate de méthyle) (PMMA), et le second bloc est le poly(méthacrylate de polyéthylène glycol), comportant 9 unités d'oxyde d'éthylène (PMAPEG). A titre d'exemple, le copolymère PLMA-*b*-PMAPEG dopé au LiCF₃SO₃ présente une conductivité de l'ordre de 8.10⁻⁶ S/cm à température ambiante, ce qui est insuffisant.

Plus récemment, Niitani et al. (Electrochemical Solid-State Letters, 2005, 8(8), 1385-A388 ; J. Power Resources, 2005, 146, 386-390 et EP 1 553 117), ont décrit un polymère tribloc composé de PMAPEG (23 unités d'OE) en tant que bloc central et de polystyrène (PS) en tant que blocs externes. Selon ce document, le polymère ayant la meilleure conductivité ionique à 30°C (2.10⁻⁴ S/cm) est un copolymère dopé au LiClO₄ avec un rapport OE:Li = 20. Cette conductivité ionique est correcte mais cela correspond à un liquide visco-élastique et non à un solide. De plus, le nombre de transport en ion lithium est faible, ce qui entraîne une mauvaise tenue en puissance et une chute importante de la capacité au-delà de C/10.

La demande internationale WO 00/05774 décrit un électrolyte polymère solide incluant un copolymère bloc à micro-séparation de phase comprenant un bloc conducteur ionique, un second bloc non miscible avec le bloc conducteur ionique, un anion immobilisé sur l'électrolyte polymère, et une espèce cationique (Li⁺) assurant la neutralité du polymère et la mobilité ionique. L'utilisation d'un tel copolymère permet d'éviter l'emploi d'un sel de lithium additionnel. Dans ce copolymère, l'anion est de préférence immobilisé sur le second bloc ce qui induit une micro-séparation de phase des cations et des anions de l'électrolyte polymère dans le but d'améliorer le nombre de transport des ions lithium (t⁺) à une valeur supérieure à 0,5. Le bloc conducteur ionique peut notamment être constitué d'oxyde de polyéthylène (PEO), de polyéthylène glycol (PEG), d'oxyde de polypropylène (PPO) ou de polypropylène glycol (PPG). La masse moléculaire moyenne en nombre du bloc conducteur ionique est supérieure à 50 kg/mol, et de façon particulièrement préférée supérieure à 200000 kg/mol. Le second bloc est non miscible avec le premier et peut être constitué d'un bloc non conducteur ionique tel qu'un polyalkylacrylate type méthacrylate, un polydiméthylsiloxane, un polybutadiène, un polyisoprène, des polystyrènes modifiés avec des chaînes latérales flexibles alkylfluorocarbone ou siloxane fixées sur les groupements phényle, etc ... L'anion est de préférence lié au polymère par une liaison covalente et peut être choisi parmi les carboxylates, les sulfonates et les phosphates. Ces polymères peuvent être utilisés dans n'importe quel type de batteries et ont des températures de fonctionnement variant entre 20 et 100°C.

Il a par ailleurs également été proposé, notamment par R. Meziane et al., (Electrochimica Acta, 2011, sous presse, disponible en ligne doi:10.1016/j.electacta.2011.03.074), des polymères comprenant un polyanion délocalisé fixé sur le squelette polymère, en remplacement dés électrolytes polymères constitués d'un simple mélange d'un polymère de type POE et d'un sel à base de bis(trifluorométhylsulfonyl)imide de lithium, en particulier dans le but d'augmenter le nombre de transport des ions Li⁺ qui n'est que de l'ordre de 0,2 environ pour ce type d'électrolyte classique. Le polymère est un polystyrène portant des groupements sulfonyl(trifluorométhylsulfonyl)imide (PSTFSI (a)), il est obtenu par polymérisation radicalaire à partir de monomères de type 4-styrène-sulfonyl(trifluorométhylsulfonyl)imide de sodium. Ce polymère est ensuite utilisé en simple mélange avec du POE pour réaliser une membrane d'électrolyte ne contenant pas d'ions lithium additionnel. A titre comparatif, des membranes préparées avec du PSTFSI obtenu par modification chimique du polystyrène sulfonate de sodium (PSTFSI (b)) en mélange avec du POE, ainsi qu'avec du poly(styrène sulfonate) de lithium (PSSOgLi) en mélange avec du POE sont également testées pour leur conductivité ionique. Les résultats obtenus montrent une conductivité équivalente à 70°C entre les membranes constituées du mélange PSTFSI (b)/POE et du mélange PSSO₃Li/PO alors que celle obtenue avec la membrane PSTFSI (a)/POE est 10 fois plus élevée (de l'ordre de 9.5×10⁻⁶ S cm⁻¹). Le nombre de transport des ions lithium n'est cependant pas indiqué. Les auteurs indiquent néanmoins que la conductivité de la membrane PSTFSI (a)/POE est encore insuffisante au regard de la conductivité ionique souhaitable qui est de l'ordre de 10⁻⁵ S cm⁻¹ à température ambiante..De plus, comme les deux polymères ne sont pas liés entre eux de façon covalente, une macro-séparation de phase entrainant une chute de conductivité au cours du temps est probable.

Il existe donc un besoin pour un composé qui puisse être utilisé à titre d'électrolyte solide pour batteries de type LMP, ayant une conductivité ionique encore améliorée par rapport à celle des polymères disponibles dans l'art antérieur, un nombre de transport des ions lithium élevé, tout en ayant également une bonne tenue mécanique.

Ce but est atteint par l'utilisation, à titre d'électrolyte solide, des composés qui constituent l'objet de l'invention et qui vont être décrits ci-après.

La présente invention a pour objet un copolymère di-bloc de type BA ou tri bloc dé type BAB, caractérisé en ce que :
- le bloc A est une chaîne de polyoxyéthylène non substituée ayant une masse moléculaire moyenne en nombre inférieure ou égale à 100 kDa ;
- le bloc B est un polymère anionique susceptible d'être préparé à partir d'un ou plusieurs monomères choisis parmi les monomères vinyliques et dérivés, lesdits monomères étant substitués par un anion sulfonyl(trifluorométhylsulfonyl)imide (TFSI) de formule suivante : 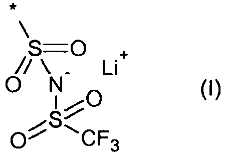
dans laquelle * représente le point d'attachement dudit anion de formule (I) audit monomère par l'intermédiaire d'une liaison covalente ou d'une chaîne alkyle linéaire ayant de 1 à 5 atomes de carbone.

Dans les copolymères conformes à l'invention, l'anion de formule (I) est attaché sur la chaine constituant le bloc B, soit directement par l'intermédiaire d'une liaison covalente, soit par l'intermédiaire d'une chaine alkyle. Le seul ion mobile après dissociation du copolymère est le cation Li⁺, ce qui lui confère des propriétés spécifiques (très bonne conductivité, nombre de transport des cations Li⁺ (t⁺) proche de 1) tout en ayant également une bonne tenue mécanique.

Selon l'invention, le bloc A comprend de préférence de 225 à 2250 motifs d'oxyde d'éthylène, et encore plus préférentiellement de 500 à 1150 motifs d'oxyde d'éthylène. Une valeur tout particulièrement préférée est 795 motifs d'oxyde d'éthylène.

La masse moléculaire du bloc A est toujours inférieure à 100 kDa et varie préférentiellement de 10 à 50 kDA.

Parmi les monomères vinyliques constitutifs du ou des blocs B, on peut en particulier mentionner le styrène-sulfonyl(trifluorométhylsulfonyl)imide de lithium (STFSILi) ou (I'-1), l'acrylate de sulfonyl(trifluorométhylsulfonyl)imide de lithium (ATFSILi) ou (I'-2), le méthacrylate de sulfonyl(trifluorométhylsulfonyl)imide de lithium (MMATFSILi) ou (I'-3), l'acrylamide de sulfonyl(trifluorométhylsulfonyl)imide de lithium (I'-4), le méthacrylamide de sulfonyl(trifluorométhylsulfonyl)imide de lithium (I'-5), l'éthylène-sulfonyl(trifluorométhylsulfonyl)imide de lithium (I'-6), le propylène-sulfonyl(trifluorométhylsulfonyl)imide de lithium (I'-7), les diènes-sulfonyl(trifluorométhylsulfonyl)imide de lithium (I'-8), et la maléimide-sulfonyl(trifluorométhylsulfonyl)imide de lithium (I'-9). Ces monomères peuvent être représentés par les formules (I'-1) à (I'-9) suivantes :

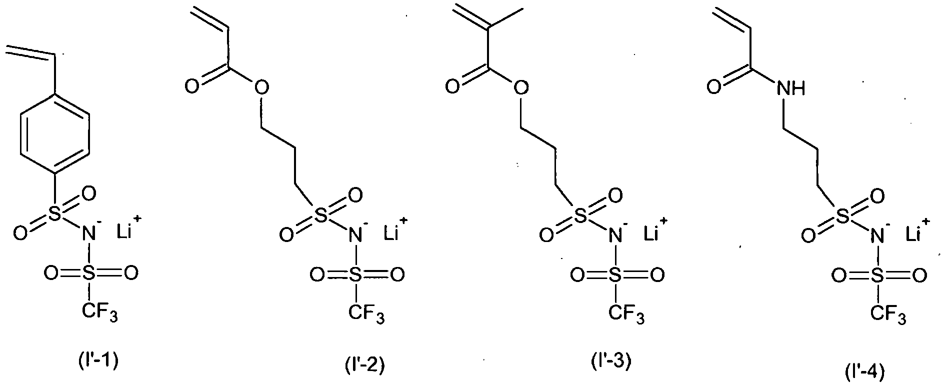

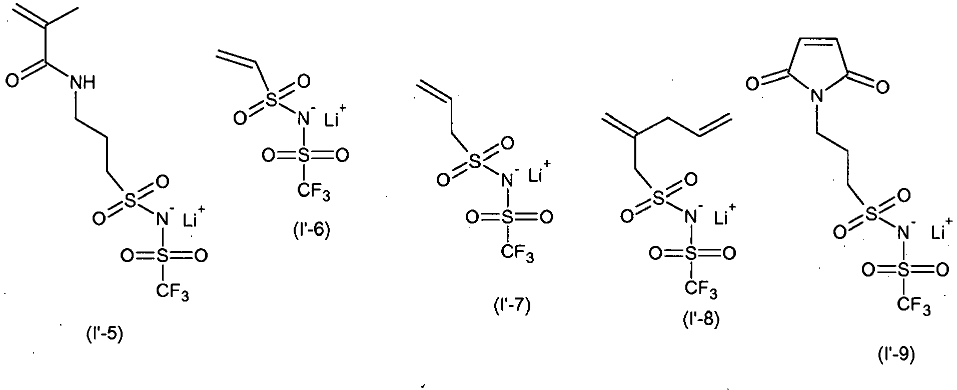

Le bloc B peut en outre résulter de la copolymérisation d'au moins un monomère vinylique tel que défini ci-dessus et d'au moins un monomère choisi parmi le styrène, un acrylate de poly(éthylène glycol) (APEG) et un acrylate d'alkyle dans lequel le groupement alkyle comporte de 1 à 16 atomes carbone.

Selon une forme de réalisation préférée de l'invention, le copolymère est choisi parmi :
i) les copolymères tribloc de type P(STFSILi)-*b*-POE-*b*-P(STFSILi) dans lesquels le rapport P(STFSILi)/POE varie de 10 à 40 % en masse environ ;
ii) les copolymères tribloc de type P(MMATFSILi-stat-APEG)-*b*-PEO-*b-*P(MMATFSILi-stat-APEG) dans lesquels les blocs B sont des copolymères statistiques de méthacrylate de TFSILi et d'acrylate de polyéthylène glycol pour lesquels le rapport P(MMATFSILi-stat-APEG)/POE varie de 10 à 40 % en masse environ.

Des copolymères particulièrement préférés selon la présente invention sont les copolymères P(STFSILi)-*b*-POE-*b*-P(STFSILi), dans lesquels chacun des blocs PSTFSILi présente une masse moléculaire moyenne en nombre variant de 2000 à 7500 g/mol et le bloc central de POE une masse moléculaire moyenne en nombre de 35000 g/mol. Un copolymère encore plus particulièrement préféré selon la présente invention est le copolymère P(STFSILi)-*b*-POE-*b*-P(STFSILi), dans lequel chacun des blocs PSTFSILi présente une masse moléculaire moyenne en nombre d'environ 4900 g/mol et le bloc central de POE une masse moléculaire moyenne en nombre de 35000 g/mol, le bloc POE représentant 78% en masse de la masse totale du copolymère.

Un autre copolymère particulièrement préféré selon la présente invention est le copolymère P(MMATFSILi-stat-APEG)-*b*-PEO-*b*-P(MMATFSILi-stat-APEG) dans lequel les blocs B sont des copolymères statistiques de méthacrylate de TFSILi et d'acrylate de polyéthylène glycol dans lesquels chacun des blocs P(MMATFSILi-stat-APEG) présente une masse moléculaire moyenne en nombre d'environ 7500 g/mol et le bloc central de POE une masse moléculaire moyenne en nombre de 35000 g/mol, le bloc POE représentant 70% en masse de la masse totale du copolymère.

Les copolymères conformes à l'invention peuvent être préparés par toute méthode de polymérisation contrôlée (ATRP (« Atom Transfert Radical Polymerization »), RAFT (« *Reversible Addition Fragmentation Chain Transfe*r »), anionique, cationique, NMP (« *Nitroxide-Mediated Radical Polymerization* »)),
- soit directement avec un monomère vinylique portant un anion de formule (I') suivante : 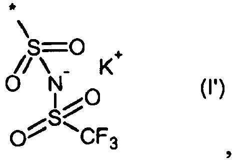
- soit indirectement avec un monomère vinylique classique, puis par post-fonctionnalisation du polymère obtenu (greffage de l'anion de formule (I').

Ladite polymérisation étant alors suivie d'une étape d'échange ionique de façon à remplacer le cation K⁺ par un cation Li⁺.

A titre d'exemple, lorsque la synthèse est réalisée selon la méthode NMP, elle consiste à synthétiser dans un premier temps une macroalcoxyamine à base de POE puis à copolymériser ladite macroalcoxyamine et les monomères vinyliques porteurs d'un anion de formule (I'), puis à réaliser un échange ionique de façon à remplacer le cation K⁺ par un cation Li⁺. La synthèse des macroalcoxyamines à base de POE peut être réalisée selon la méthode décrite dans la demande internationale WO 2007/113236. La synthèse des monomères vinyliques porteurs de l'anion de formule (I) peut par exemple être réalisée selon la méthode décrite par R. Meziane *et al*. (*ibid*).

De façon plus précise, elle consiste :
i) dans une première étape, à copolymériser des monomères portant l'anion de formule (I'), lesdits monomères étant notamment choisis parmi les monomères de formules (I'-1) à (I'-9).
   avec une macroalcoxyamine de formule (III) suivante :

   POE-(SG1)ₙ (III)

   dans laquelle :
   - n = 1 ou 2
   - SG1 est un motif de formule suivante : 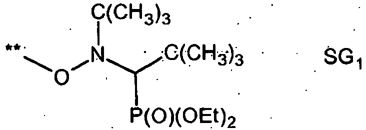
   ** étant le point d'attachement des motifs SG1 à l'une des extrémités du motif POE lorsque n = 1 et à chacune des extrémités du motif POE lorsque n = 2, POE étant une chaine de poly(oxyde d'éthylène) ayant une masse moléculaire moyenne en nombre inférieure à 100 kDa ; puis
ii) dans une deuxième étape, à échanger les cations K⁺ par des cations Li⁺.

Ainsi, selon ce procédé, la mise en réaction d'une macroalcoxyamine de formule (III) dans laquelle n = 1 conduit à l'obtention de polymères dibloc de type BA et la mise en oeuvre d'une macroalcoxyamine de formule (III) dans laquelle n = 2, conduit à l'obtention d'un copolymère tribloc de type BAB tels que définis ci-dessus.

La première étape est de préférence réalisée dans un solvant polaire tel que par exemple le N,N-diméthylformamide (DMF), diméthylsulfoxyde (DMSO), eau à une température variant de 80 à 120 °C, pendant une durée de 2 à 20 heures.

L'échange des cations de l'étape ii) peut par exemple être réalisé au moyen d'une membrane de dialyse, en utilisant un sel de lithium tel que par exemple le chlorure de lithium.

Lorsque l'étape ii) est terminée, le copolymère résultant conforme à l'invention est alors de préférence lavé pour éliminer l'excès de sel de lithium et éventuellement l'excès de monomère vinylique qui n'aurait pas polymérisé, puis la solution est de préférence évaporée sous vide pour permettre le stockage du copolymère.

Les essais réalisés montrent que l'utilisation des copolymères conformes à la présente invention à titre d'électrolyte polymère solide dans une batterie au lithium métal conduit à un dispositif de stockage de l'énergie présentant d'excellentes performances à basse température (environ 60°C), en particulier un nombre de transport des ions lithium supérieur à 0,84, et une conductivité ionique de 10⁻⁵ S.cm⁻¹ à 60°C. Les copolymères conformes à la présente invention, lorsqu'utilisés à titre d'électrolyte polymère solide présentent également une bonne tenue mécanique, une grande stabilité thermique (qui assure la sécurité des dispositifs de stockage d'énergie les comprenant), et une stabilité en potentiel améliorée. Le nombre de transport élevé permet de limiter la formation de gradient de concentration dans l'électrolyte au cours de la décharge (respectivement de la charge) permettant d'augmenter les performances en puissance (respectivement la vitesse de la charge). L'utilisation de ces copolymères à titre d'électrolyte polymère solide dans une batterie au lithium métal permet également de limiter la croissance dendritique du lithium et ainsi d'envisager des recharges rapides et sûres. En effet, le problème de la technologie des batteries lithium métal est la formation d'électrodépôts hétérogènes de lithium (dont les dendrites) au cours de la recharge ce qui diminue la cyclabilité et peut entrainer des courts-circuits. Ces polymères sont par ailleurs stables jusqu'à 4,5 V vs Li⁺/Li.

Leur utilisation comme électrolyte dans une batterie composée de lithium à l'anode et de LiFePO₄ à la cathode, conduit à un dispositif présentant une très bonne tenue en capacité (rétention de plus de 90 % de la capacité à C/2 quelle que soit la température testée, et 80 % à un régime de C).

Ainsi, l'invention a également pour objet l'utilisation d'au moins un copolymère di-bloc de type BA ou tri bloc de type BAB tel que défini précédemment, à titre d'électrolyte solide dans une batterie au lithium, et en particulier dans une batterie au lithium métal.

Un autre objet de l'invention est un électrolyte polymère solide, caractérisé en ce qu'il comprend au moins un copolymère di-bloc de type BA ou tri bloc de type BAB tel que défini précédemment.

L'électrolyte solide polymère conforme à l'invention peut comprendre en outre un plastifiant tel qu'un carbonate ou un mélange de carbonates choisis parmi le propylène carbonate, l'éthylène carbonate et le diméthylcarbonate, du succinonitrile, du tetraéthylsulfonamide, ...etc

L'électrolyte solide polymère conforme à la présente invention peut en particulier se présenter sous toute forme appropriée, par exemple sous forme d'une feuille, d'un film ou d'une membrane. L'électrolyte solide polymère conforme à l'invention peut être préparé par toute technique connue de l'homme du métier telle que par exemple par enduction ou par extrusion.

Enfin, l'invention a également pour objet une cellule d'une batterie rechargeable au lithium comprenant une anode en lithium métallique et une cathode comprenant au moins un composé actif d'électrode positive choisi parmi les composés à insertion des ions lithium entre lesquelles se trouve un électrolyte polymère solide, caractérisée en ce que ledit électrolyte polymère solide est tel que défini ci-dessus.

La température de fonctionnement idéal d'une telle cellule est de 60 à 100°C environ.

Le matériau actif d'électrode positive est de préférence choisi parmi les phosphates de lithium, et en particulier LiFePO₄, Li₃V₂(PO₄)₃, LiCoPO₄, LiMnPO₄, LiNiPO₄ ; les oxydes de lithium tels que par exemple LiCoO₂ et LiMn₂O₄ et leurs mélanges. Parmi ces composés, LiFePO₄ est tout particulièrement préféré.

Selon une forme de réalisation préférée de l'invention, le grammage de la cathode (c'est à dire la quantité de matériau actif d'électrode positive/cm²/face) est supérieur à 0,6 mAh/cm², de préférence, il varie de 0,6 à 2,5 mAh/cm².

Outre le matériau actif d'électrode positive, l'électrode positive peut également comprendre un agent générant une conductivité électrique tel qu'un matériau carboné comme par exemple du noir de carbone, des fibres de carbone, des nanotubes de carbone et leurs mélanges.

L'électrode positive peut également comprendre en outre au moins un copolymère conforme à l'invention et tel que défini précédemment, ce qui permet d'empêcher la formation d'un gradient de concentration dans l'épaisseur de la cathode lors du cyclage et ainsi d'améliorer les performances en puissance de la batterie ou d'augmenter le grammage de la cathode. Dans ce cas, le copolymère solide anionique conforme à la présente invention représente de préférence de 25 à 45 % en masse par rapport à la masse totale de la cathode.

Egalement selon une forme de réalisation préférée, les proportions massiques de l'électrode positive sont les suivantes : matériau actif d'électrode positive/électrolyte polymère solide/carbone : 60/32/8.

La présente invention est illustrée par les exemples de réalisation suivants, auxquels elle n'est cependant pas limitée.

### EXEMPLES

Matières premières utilisées dans les exemples :
- Chlorure d'oxalyle, acétonitrile anhydre (Alfa-Aeser),
- Sel de sodium de l'acide 4-styrènesulfonique, diméthylformamide (DMF), triéthylamine, diméthylaminopyrridine (DMAP), chlorure de lithium, dichlorométhane, chlorure d'acryloyle, éther diéthylique, tetrahydrofurane (THF) (Sigma-Aldrich),
- Trifluorométhylsulfonamide (Rhodia)
- Nitroxyde de formules (SG1) (Arkema) suivante : 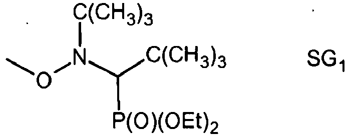
- POE α,ω hydroxylé (Mn = 10 000 g/mol et 35000 g/mol) (Sigma-Aldrich) ;
- MAMA-SG 1 de formule suivante (Arkema) :

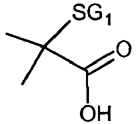

### Exemple 1

### Synthèse de copolymères à blocs de PSTFSILi-b-PEO-b-PSTKSILi

### 1) Synthèse du 4-styrènesulfonyl(trifluorométhylsulfonyl)imide de potassium ST(FSIK)

### 1.1) Synthèse du chlorure de 4-sulfonyl-styrène

2 ml de chlorure d'oxalyle (23,3 mmol) et 0,087 g (1 mmol) de diméthylformamide (DMF) ont été ajoutés dans 40 mL d'acétonitrile anhydre. Le milieu réactionnel a été agité pendant 5 heures pour promouvoir la formation d'un complexe de Vilsmeier-Haack (complexe entre le DMF et le chlorure d'oxalyle (CH₃)₂N⁺=CClH). Une fois que la solution a viré au jaune, 4 g de sel de sodium de l'acide styrène sulfonique ont été ajoutés lentement au mélange réactionnel, sous atmosphère d'azote et à température ambiante. Le mélange réactionnel a ensuite été agité pendant 24 heures à température ambiante. Le précipité de NaCl formé a été éliminé par filtration. On a obtenu 42 mL de solution de chlorure de 4-sulfonyl-styrène.
RMN ¹H (300 MHz ; DMSO-d6 ; 298 K) : δ ppm 7,59 (d , 2H) ; 7,44 (d, 2H) ; 6,72 (q, 1H) ; 5,84 (d, 1H) ; 5,27 (d, 1H) ; 5,27 (d, 1H).
RMN ¹³C (75 MHz ; DMSO-d6 ; 298 K) : δ ppm 146,91 ; 137,66 ; 136,16 ; 125,93 ; 125,72 ; 115,18.

### 1.2) Synthèse du 4-styrènesulfonyl(trifluorométhylsulfonyl)imide de potassium (STFSIK)

8,1 mL de triéthylamine (28,2 mmol), 2,89 g de trifluorométhylsulfonamide (19,4 mmol) et une quantité catalytique de DMAP (environ 215 mg) ont été ajoutés successivement dans 30 mL d'acétonitrile anhydre. Le mélange réactionnel a été agité pendant 1 heure. La solution de chlorure de 4-sulfonyl-styrène obtenu ci-dessus à l'étape 1.1) a été refroidie à 0°C, puis on y a ajouté lentement le milieu réactionnel contenant le trifluorométhylsulfonamide. Le mélange résultant a été placé sous agitation magnétique énergique pendant 16 heures. Après évaporation du solvant, on a récupéré un solide brun qui a ensuite été dissous dans 50 mL de dichlorométhane. Cette solution a été lavée deux fois avec 20 mL d'une solution aqueuse de NaHCO₃ à 4 % puis avec 20 mL d'acide chlorhydrique 1M. Le 4-styrènesulfonyl(trifluorométhylsulfonyl)imide de potassium a été obtenu par neutralisation du monomère acide à l'aide d'un excès de K₂CO₃ dans l'eau. La suspension résultante a été agitée pendant 1 heure, filtrée et séchée pour donner 4,2 g du produit attendu sous la forme d'un solide jaune clair. Sa recristallisation dans l'eau a donné 3,63 g de poudre (rendement 53 %).
RMN ¹H (300 MHz ; DMSO-*d6* ; 298 K) : δ ppm 7,73 (d, 2H) ; 7,57 (d, 2H) ; 6,79 (q, 1H) ; 5,95 (d, 1H) ; 5,38 (d, 1H).
RMN ¹³C (75 MHz ; DMSO-*d6* ; 298 K) : δ ppm 144,21 ; 139,55 ; 135,57 ; 126,43 ; 125,87 ; 126,36.

### 2) Synthèse de la macroalcoxyamine PEO-diSG1

On a synthétisé la macroalcoxyamine SG1-MAMA-POE-MAMA-SG1 (ou PEO-diSG 1) de formule suivante : 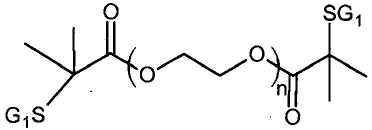 dans laquelle SG1 est tel que défini ci-dessus et la valeur de n est telle que Mn = 35 kg/mol.

10 g de POE α,ω hydroxylé (Mn = 10 000 g/mol), 1,4 mL de triéthylamine ont été solubilisés dans un ballon tricol contenant 40 mL de dichlorométhane. Le mélange réactionnel a été dégazé par bullage d'azote pendant 20 minutes. A l'aide d'une ampoule à brome, on a ensuite introduit goutte à goutte et à une température de 90°C, 0,9 mL de chlorure d'acryloyle solubilisé (5 éq.) dans 10 mL de dichlorométhane. On a laissé réagir pendant environ 15 heures. Le mélange réactionnel a été filtré pour éliminer le chlorure de triéthylammonium. Le filtrat a été lavé deux fois avec 20 mL d'une solution aqueuse saturée en NaHCO₃. La phase organique a été précipitée dans de l'éther diéthylique. Le diacrylate de POE a été récupéré par filtration puis séchage sous vide. Ensuite, 2 g de diacrylate de POE ont été introduits dans un « Schlenk » muni d'un « Rotaflo ». 0,16 g (4,2 mmol) de MAMA-SG1 de formule indiquée ci-dessus, dissoute dans 6 mL de THF, ont été introduits sur le diacrylate de POE. La suspension a été désoxygénée par barbotage d'azote pendant 30 minutes. Le « Schlenk » a été plongé dans un bain d'huile thermostate à 100°C pendant 1 heure. Le THF a été évaporé sous vide à température ambiante.

On obtenu la PEO-diSG1 attendue.

### 3) Synthèse d'un copolymère à blocs de PSTFSILi-b-PEO-b-PSTFSILi à 30,8 % en masse de PSTFSILi

0,84 g de macroalcoxyamine PEO-diSG1 obtenue ci-dessus à l'étape précédente (2,34.10⁻⁵ mol), 0,6 g de STFSIK (1,7.10⁻³ mol) obtenu ci-dessus à l'étape 1), 1,15.10⁻³ g de nitroxyde de formule SG1 (pureté à 85% massique d'où 3,3.10⁻⁶ mol), et 3,5 mL de DMF ont été placés dans un ballon tricol équipé d'un réfrigérant, d'un bulleur et d'un barreau aimanté. Le mélange a été dégazé pendant 20 min par barbotage d'argon afin d'éliminer l'oxygène du milieu réactionnel. Le mélange a ensuite été chauffé à 110°C pendant 4 h. La réaction de polymérisation a été stoppée en plongeant le ballon dans un bain de glace. Le solvant (DMF) a ensuite été évaporé sous vide et le résidu obtenu a été dissous dans 30 mL d'eau permutée. La solution obtenue a alors été placée dans une membrane de dialyse vendue sous la dénomination commerciale Cellu-Sep® T2 par la société Orange Scientific, ayant un seuil de rétention (MWCO) de 6 000-8 000 Da et dialysée avec 4 fois 1 litre de solution de chlorure de lithium (0,25 mol/L), afin de réaliser l'échange de cations K⁺ par les cations Li⁺ (0,25 mol/L), puis par 4 fois 1 litre d'eau permutée afin d'éliminer l'excès de chlorure de lithium. L'étape de dialyse a également permis d'éliminer le monomère et le DMF restant. La solution de copolymère a ensuite été évaporée sous vide.

On a obtenu le copolymère à blocs attendu dans lequel chacun des blocs PSTFSILi présentait une masse moléculaire moyenne en nombre de 7300 g/mol (estimé à partir de 30,8 % massique mesuré par RMN) et le bloc central de POE une masse moléculaire moyenne en nombre de 35000 g/mol, le bloc PSTFSILi représentant 30,8 % en masse de la masse totale du copolymère.

Des copolymères identiques mais dans lesquels le bloc PSTFSILi représentait respectivement 9,5 ; 21,4 ou 42,9 % en masse de la masse totale du copolymère ont également été préparés dans cet exemple :

### Synthèse d'un copolymère à blocs de PSTFSILi-b-PEO-b-PSTKSILi à 9,5 % en masse de PSTFSILi.

0,72 g de macroalcoxyamine PEO-diSG1 obtenue ci-dessus à l'étape précédente (2,02.10⁻⁵ mol), 0,15 g de STFSIK (4,26.10⁻⁴ mol) obtenu ci-dessus à l'étape 1), 9,89.10⁻⁴ g de nitroxyde de formule SG1 (pureté à 85% massique d'où 2,9.10⁻⁶ mol), et 2,2 mL de DMF ont été placés dans un ballon tricol équipé d'un réfrigérant, d'un bulleur et d'un barreau aimanté. Le mélange a été dégazé pendant 20 min par barbotage d'argon afin d'éliminer l'oxygène du milieu rédactionnel. Le mélange a ensuite été chauffé à 110°C pendant 2h50. La purification a été réalisée de la même manière que le copolymère à 30%.

On a obtenu le copolymère à blocs attendu dans lequel chacun des blocs PSTFSILi présentait une masse moléculaire moyenne en nombre de 1800 g/mol (estimé à partir de 9,5 % massique mesuré par RMN) et le bloc central de POE une masse moléculaire moyenne en nombre de 35000 g/mol, le bloc PSTFSILi représentant 9,5 % en masse de la masse totale du copolymère.

### Synthèse d'un copolymère à blocs de PSTFSILi-b-PEO-b-PSTKSILi à 21,4 % en masse de PSTFSILi.

0,96 g de macroalcoxyamine PEO-diSG1 obtenue ci-dessus à l'étape précédente (2,67.10⁻⁵ mol), 0,4 g de STFSIK (1,13.10⁻³ mol) obtenu ci-dessus à l'étape 1), 1,31.10⁻³ g de nitroxyde de formule SG1 (pureté à 85% massique d'où 3,8.10⁻⁶ mol), et 3,3 mL de DMF ont été placés dans un ballon tricol équipé d'un réfrigérant, d'un bulleur et d'un barreau aimanté. Le mélange a été dégazé pendant 20 min par barbotage d'argon afin d'éliminer l'oxygène du milieu réactionnel. Le mélange a ensuite été chauffé à 110°C pendant 3h10. La purification a été réalisée de la même manière que le copolymère à 30,8%.

On a obtenu le copolymère à blocs attendu dans lequel chacun des blocs PSTFSILi présentait une masse moléculaire moyenne en nombre de 4800 g/mol (estimé à partir de 21,4 % massique mesuré par RMN) et le bloc central de POE une masse moléculaire moyenne en nombre de 35000 g/mol, le bloc PSTFSILi représentant 21,4 % en masse de la masse totale du copolymère.

### Synthèse d'un copolymère à blocs de PSTFSILi-b-PEO-b-PSTKSILi à 42,9% en masse de PSTFSILi

0,72 g de macroalcoxyamine PEO-diSG1 obtenue ci-dessus à l'étape précédente (2,02.10⁻⁵ mol), 0,8 g de STFSIK (2,26.10⁻³ mol) obtenu ci-dessus à l'étape 1), 9,85.10⁻³ g de nitroxyde de formule SG1 (pureté à 85% massique d'où 2,8.10⁻⁶ mol), et 4,7 mL de DMF ont été placés dans un ballon tricol équipé d'un réfrigérant, d'un bulleur et d'un barreau aimanté. Le mélange a été dégazé pendant 20 min par barbotage d'argon afin d'éliminer l'oxygène du milieu réactionnel. Le mélange a ensuite été chauffé à 110°C pendant 4h20. La purification a été réalisée de la même manière que le copolymère à 30,8%.

On a obtenu le copolymère à blocs attendu dans lequel chacun des blocs PSTFSILi présentait une masse moléculaire moyenne en nombre de 13100 g/mol (estimé à partir de 42,9 % massique mesuré par RMN) et le bloc central de POE une masse moléculaire moyenne en nombre de 35000 g/mol, le bloc PSTFSILi représentant 42,9 % en masse de la masse totale du copolymère.

### Exemple 2

### Synthèse d'un copolymère à blocs de P(MMATFSILi-stat-APEG)-b-PEO-b-P(MMATFSILi-stat-APEG)

### 1) Synthèse du 3-sulfonyl(trifluorométhylsulfonyl)imide propyl méthacrylate de potassium (MMATFSIK)

Ce produit a synthétisé selon le même protocole que le 4-styrènesulfonyl(trifluorométhylsulfonyl)imide de potassium (STFSIK) en utilisant le sel de potassium de l'acide 3-sulfopropyl méthacrylique à la place du sel de sodium de l'acide styrène sulfonique. 2,0 mL de chlorure d'oxalyle, 0,087 g de DMF, 40 mL d'acétonitrile anhydre et 5,0 g du sel de potassium de l'acide 3-sulfopropyl méthacrylique ont tout d'abord été utilisés ; puis : 8,1 mL de triéthylamine, 2,89 g de trifluorométhylsulfonamide, une quantité catalytique de DMAP (environ 215 mg) et 30 mL d'acétonitrile anhydre.
RMN ¹H (300MHz ; DMSO-*d6*; 298 K) : δ ppm 6,04 (s, 1H) ; 5,67 (m, 1H) ; 4,17 (t, 2H) ; 3,06 (m, 2H) ; 2,01 (m, 2H) ; 1,88 (s, 3H) ;
RMN ¹³C (75 MHz; DMSO-*d6*; 298 K) : δ ppm 166,4 (C=O) ; 135,7 (C=C) ; 125,7 (CH₂=C) ; 120,0 (CF₃ q) ; 63,6 ; 1,2 ; 23,4 ; 17,9.

### 2) Synthèse du copolymère à blocs de P(MMATFSILi-stat-APEG)-b-PEO-b-P(MMATFSILi-stat-APEG) à 9% en masse de P(MMATFSILi-stat-APEG)

1,05 g de macroalcoxyamine PEO-diSG1 obtenue ci-dessus à l'étape 2) de l'exemple 1 (3,0.10⁻⁵ mol), 0,124 g de MMATFSIK (1,13.10⁻³ mol) obtenu ci-dessus à l'étape 1), 8,7.10⁻⁴ g de nitroxyde de formule SG1 (pureté à 85% massique d'où 3,3.10⁻⁵ mol), et 4,8 mL d'eau permutée ont été placés dans un tube de Schlenk équipé d'un barreau aimanté. Le mélange a été dégazé par 3 cycles successifs de congélation dans l'azote liquide/dégazage sous vide/décongélation/mise sous atmosphère d'argon, afin d'éliminer l'oxygène du milieu réactionnel. Le mélange a ensuite été chauffé à 110°C pendant 4h. La réaction de polymérisation a été stoppée en plongeant le ballon dans un bain de glace. Le mélange réactionnel obtenu a été diluée dans 30 mL d'eau permutée et placé dans une membrane de dialyse vendue sous la dénomination commerciale Cellu-Sep® T2 par la société Orange Scientific, ayant un seuil de rétention (MWCO) de 6,000-8,000 Da et dialysé avec 4 fois 1 litre de solution de chlorure de litliium (0,25 mol/L), afin de réaliser l'échange de cations K⁺ par les cations Li⁺ (0,25 mol/L), puis par 4 fois 1 litre d'eau permutée afin d'éliminer l'excès de chlorure de lithium. L'étape de dialyse a également permis d'éliminer le monomère restant. La solution de copolymère a ensuite été évaporée sous vide.

On a obtenu le copolymère à blocs attendu dans lequel chacun des blocs P(MMATFSILi-stat-APEG) présentait une masse moléculaire moyenne en nombre de 1700 g/mol (estimé à partir de 9% massique mesuré par RMN) et le bloc central de POE une masse moléculaire moyenne en nombre de 35000 g/mol, le bloc P(MMASTFSILi-stat-APEG) représentant 9 % en masse de la masse totale copolymère (7% de MMATFSILi et 2% d'APEG).

Des polymères P(MMATFSILi-stat-APEG)-*b*-PEO-*b*- P(MMATFSILi-stat-APEG) à 20 et 30 % en poids de P(MMASTFSILi-stat-APEG) respectivement ont également été préparés selon le même procédé en utilisant des proportions différentes de matière première.

### Exemple 3

### Etude des propriétés physiques et chimiques des PSTFSILi-b-PEO-b-PSTKSILi préparés à l'exemple 1

### 1) Propriétés thermodynamiques

La fusion des cristallites de POE dans les différents copolymères préparés ci-dessus à l'exemple 1 a été étudiée par analyse thermique différentielle (DSC de l'expression anglaise *«Differential Scanning Calorimetry* ») au moyen d'un appareil vendu sous la référence DSC 2920 par la société Thermal Analysis en utilisant une nacelle d'aluminium, dans le domaine de température -70°C à 80°C avec une vitesse de chauffe de 5°C/min, (débit d'azote : 10 mL/min).

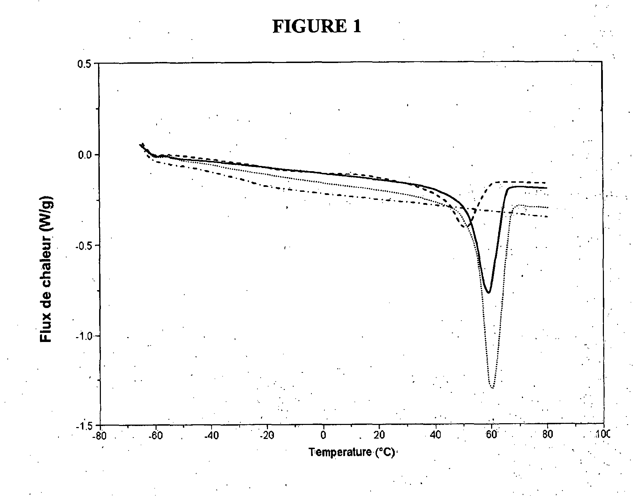

Les thermogrammes obtenus sont présentés sur la figure 1 annexée sur laquelle le flux de chaleur (en W/g) est fonction de la température. Sur cette figure, la courbe en pointillés correspond au copolymère à 9,5 % en poids de PSTFSILi, la courbe en trait continu au copolymère à 21,2 % en poids de PSTFSILi, la courbe en tirés espacés au copolymère à 30,8 % en poids de PSTFSILi et la courbe et tirets et points alternés au copolymère à 42,9 % en poids de PSTFSILi.

Les données sont résumées dans le tableau 1 ci-après :

**TABLEAU 1**

| **% massique de P(STFSILi)** | **T_{f} (°C)** | **ΔHf Tribloc (J/g)** | **ΔHf POE (J/g)** | **Taux de Cristallinité %** | **Tg (°C)** |
|---|---|---|---|---|---|
| 0 | 63.9 | / | 179 | 83 | -60 |
| 9,5 | 54,3 | 115,4 | 127,5 | 59,7 | - |
| 21,4 | 51,3 | 79,4 | 100,1 | 47,3 | - |
| 30,8 | 40,5 | 48,2 | 69,6 | 32,6 | -25,1 |
| 42,9 | - | - | - | - | -25,8 |

Dans ce tableau, T_{f} est la température de fusion, ΔHf tribloc est l'enthalpie de fusion du copolymère tribloc, ΔHf POE est l'enthalpie de fusion du bloc POE uniquement, et Tg est la température de transition vitreuse du POE.

On constate une forte diminution à la fois de la température de fusion et de l'enthalpie de fusion (pic endothermique) des cristallites de POE lorsque la proportion de P(STFSILi) augmente de telle sorte que l'échantillon à 42,9% en masse de POE ne présente plus aucune trace de fusion. On constate également une augmentation importante de la température de transition vitreuse du POE, caractéristique d'une mobilité segmentaire réduite qui est à relier à une forte interaction des groupements éther du POE avec les groupements TFSILi du bloc polyanionique similaire à celle de l'homo POE directement complexé avec un sel de TFSILi. Une telle complexation est très favorable à la dissociation de la tête polaire TFSILi et à la formation d'une paire anion (fixe)/cation (mobile).

### 2) Conductivité ionique

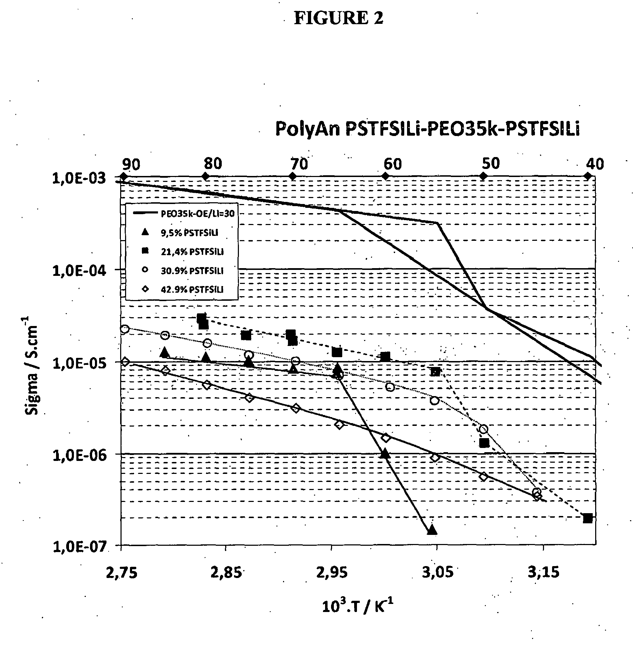

La caractérisation de la conductivité ionique des copolymères préparés à l'exemple 1 ci-dessus a été réalisée par spectroscopie d'impédance sur un analyseur de fréquences 1260 vendu par la société Solartron. Les résultats obtenus sont reportés sur la figure 2 annexée sur laquelle les variations obtenues en fonction de la température sont données en coordonnées d'Arrhenius. Sur ces figures, sont également représentées les valeurs obtenues avec un homopolymère de PEO de masse moléculaire moyenne en nombre égale à 35 kg/mol, dopé par un sel de lithium (LiTFSI) en une quantité telle que le rapport OE/Li était de 30 (courbe en trait noir continu). Le maximum de conductivité est observé pour 78% en masse de PEO par rapport à la masse totale du copolymère soit pour un rapport OE/Li approximativement de 30. Celle-ci atteint 10⁻⁵ S.cm⁻¹ à 60°C, ce qui est sans précédent à une telle température de fonctionnement pour les électrolytes polymères sans solvant à anions fixés. Le nombre de transport de ces matériaux a été mesuré par impédance à l'aide d'un analyseur de fréquences 1260 vendu par la société Solartron, il atteint des valeurs supérieures à 0,84.

### 3) Stabilité en potentiel

La stabilité électrochimique de ces copolymères a été étudiée par voltamétrie cyclique en utilisant des cellules constituées d'une anode en lithium métal, d'un copolymère tel que préparé à l'exemple 1 à titre d'électrolyte solide et d'une feuille de platine comme cathode. Les mesures ont été effectuées à 80°C entre 1,5 et 5,5 V (vs Li⁺/Li) à une vitesse de balayage de 1 mVs⁻¹.

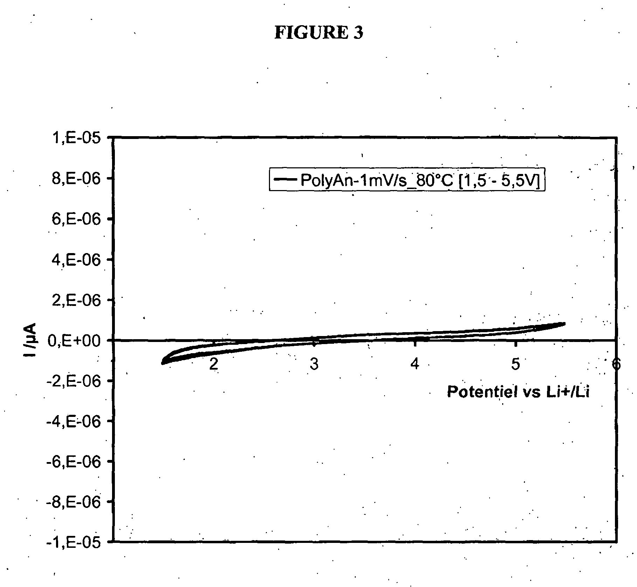

Les résultats obtenus sont donnés sur la figure 3 annexée sur laquelle l'intensité (en µA) est fonction du potentiel (en V vs Li+/Li).

Ces résultats montrent que ces copolymères sont stables jusqu'à 4,5 V vs Li+/Li, ce qui est supérieur à celle de l'homopolymère de PEO dopé au sel de lithium correspondant (3,8 V vs Li+/Li). Ce résultat est cohérent avec le fait que l'instabilité à haut potentiel est due aux anions qui, dans le cas des copolymères conformes à l'invention, sont fixés sur le squelette du polymère ce qui renforce leur stabilité électrochimique. Cela permet d'envisager l'utilisation de matériaux de cathode à relativement haut potentiel (entre 4 et 4,3 V vs Li⁺/Li) tels que le LiCoO₂, LiMn₂O₄, Li₃V₂(PO₄)₃...

### Exemple 4

### Préparation de batteries au lithium incorporant les copolymères PSTFSILi-b-PEO-b-PSTKSILi préparés à l'exemple 1 à titre d'électrolyte polymère solide

Des prototypes de batteries à base du copolymère conforme à la présente invention, à 30,8 % en masse de P(STFSILi) tel que préparé ci-dessus à l'exemple 1, ont été assemblés en utilisant du lithium métallique comme anode et du LiFePO₄ à la cathode comme matériau de cathode modèle. L'épaisseur de la couche d'électrolyte solide était d'environ 70 µm. Une formulation non optimisée de cathode composite à 60 % en masse de LiFePO₄, 32 % en masse de copolymère conforme à l'invention et 8 % en masse de carbone black a été réalisée par enduction. La capacité surfacique mesurée était de l'ordre de 0,75 mAh.cm⁻², ce qui est comparable aux technologies Li-ion standards.

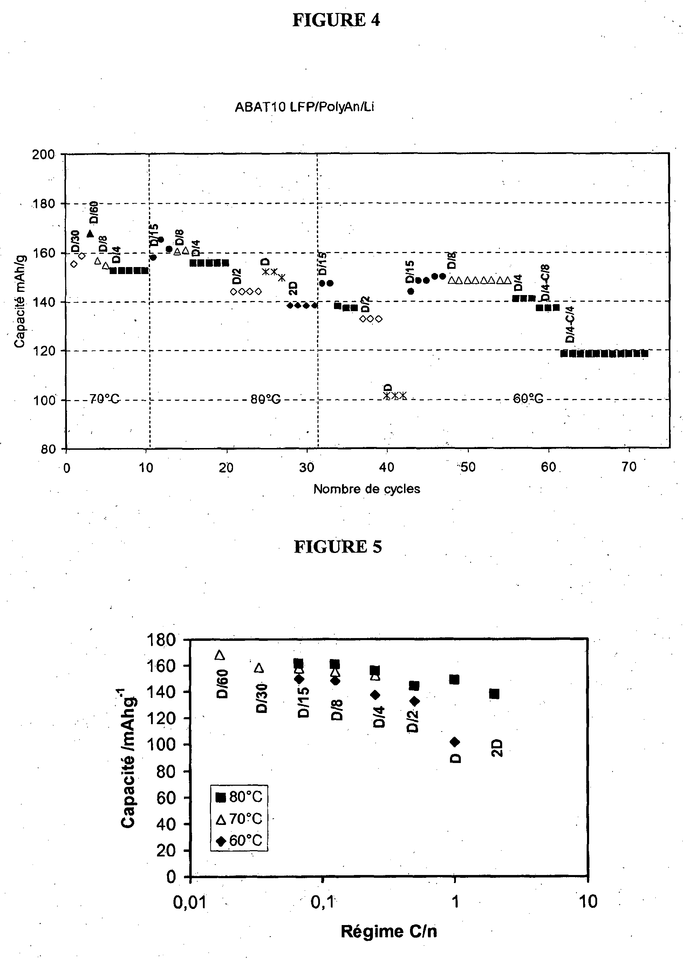

Des tests de cyclage ont été menés à différentes températures (60°C, 70°C et 80°C) et différents régimes de décharge de D/60 à 2D, la charge est généralement de C/15 sauf sur les derniers cycles C/8 et C/4. La figure 4 annexée présente la capacité (en mAh/g) restituée en fonction du nombre de cycle de la batterie testée. Les différents régimes sont indiqués sur la figure ainsi que les températures de tests.

Les résultats sont très intéressants dans la mesure où la batterie ainsi préparée présente une cyclabilité comparable à 60, 70 et 80°C ce qui est une performance par rapport aux résultats de la littérature sur les polymères secs. D'autant plus que c'est le même prototype de batterie qui a fonctionne dans les différentes conditions thermiques, ce qui est un traitement drastique car les tests sont habituellement réalisés en conditions isothermes, sauf dans les cas d'une simulation de vieillissement accéléré.

Là tenue en puissance de la batterie est donnée par la figure 5 annexée sur laquelle la capacité restituée (en mAh/g) est fonction du logarithme de la densité de courant (courbe de pseudo Ragone). Sur cette figure, la courbe dont les points sont des carrés plein correspond au fonctionnement à 80°C, la courbe dont les points sont des triangles vides correspond au fonctionnement à 70°C, et la courbe dont les points sont des losanges pleins correspond au fonctiomiement à 60°C.

On constate notamment une rétention de plus de 80%. de la capacité à C/2 quelle que soit la température testée et une restitution de 80% de la capacité à 80°C à 2D. Il n'existe pas *a priori* de technologie polymère sec offrant de telles performances dans l'art antérieur. Sans vouloir être liés par une quelconque théorie, les inventeurs pensent que ces résultats sont liés au fait que l'électrolyte présent entre les deux électrodes, mais aussi dans la cathode composite, présente un nombre de transport cationique s'approchant de 1 tout en ayant une conductivité correcte (peu pénalisante en terme de polarisation). Cela permet d'empêcher la formation de gradients de concentration (dans l'électrolyte et l'électrode) lors du cyclage, ce qui limite usuellement très fortement la puissance des batteries.

## Revendications

1. Copolymère di-bloc de type BA ou tri bloc de type BAB, **caractérisé en ce que** :
- le bloc A est une chaine de polyoxyéthylène non substituée ayant une masse moléculaire moyenne en nombre inférieure ou égale à 100 kDa ;
- le bloc B est un polymère anionique susceptible d'être préparé à partir d'un ou plusieurs monomères choisis parmi les monomères vinyliques et dérivés, lesdits monomères étant substitués par un anion (trifluorométhylsulfonyl)imide (TFSI) de formule suivante : 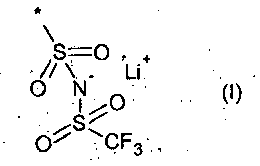 dans laquelle * représente le point d'attachement dudit anion de formule (I) audit monomère par l'intermédiaire d'une liaison covalente ou d'une chaine alkyle linéaire ayant de 1 à 5 atomes de carbone.

2. Copolymère selon la revendication 1, **caractérisé en ce que** le bloc A comprend de 225 à 2250 motifs d'oxyde d'éthylène.

3. Copolymère selon la revendication 1 ou 2, **caractérisé en ce que** la masse moléculaire du bloc A varie de 10 à 50 kDA.

4. Copolymère selon l'une quelconque des revendications précédentes, **caractérisé en ce que** les monomères vinyliques constitutifs du ou des blocs B sont choisis parmi le styrène-sulfonyl(trifluorométhylsulfonyl)imide de lithium, l'acrylate de sulfonyl(trifluorométhylsulfonyl)imide de lithium, le méthacrylate de sulfonyl(trifluorométhylsulfonyl)imide de lithium, l'acrylamide de sulfonyl(trifluorométhylsulfonyl)imide de lithium, le méthacrylamide de sulfonyl(trifluorométhylsulfonyl)imide de lithium, l'éthylène-sulfonyl(trifluorométhylsulfonyl)imide de lithium, le propylène-sulfonyl(trifluorométhylsulfonyl)imide de lithium, les diènes-sulfonyl(trifluorométhylsulfonyl)imide de lithium, et la maléimide-sulfonyl(trifluorométhylsulfonyl)imide de lithium.

5. Copolymère selon l'une quelconque des revendications 1 à 4, **caractérisé en ce que** le bloc B résulte de la copolymérisation d'au moins un monomère vinylique tel que défini à la revendication 4 et d'au moins un monomère choisi parmi le styrène, un acrylate de poly(éthylène glycol) et un acrylate d'alkyle dans lequel le groupement alkyle comporte de 1 à 16 atomes carbone.

6. Copolymère selon l'une quelconque des revendications précédentes, **caractérisé en ce qu'**il est choisi parmi :
i) les copolymères tribloc de type P(STFSILi)-*b*-POE-*b*-P(STFSILi) dans lesquels le rapport P(STFSILi)/POE varie de 10 à 40 % en masse ;
ii) les copolymères tribloc de type P(MMATFSILi-stat-APEG)-*b*-PEO-*b-*P(MMATFSILi-stat-APEG) dans lesquels les blocs B sont des copolymères statistiques de méthacrylate de TFSILi et d'acrylate de polyéthylène glycol dans lesquels le rapport P(MMATFSILi-stat-APEG)/POE varie de 10 à 40 % en masse.

7. Copolymère selon l'une quelconque des revendications précédentes, **caractérisé en ce qu'**il est choisi parmi les copolymères P(STFSILi)-*b*-POE-*b-*P(STFSILi), dans lesquels chacun des blocs PSTFSILi présente une masse moléculaire moyenne en nombre variant de 2000 à 7500 g/mol et le bloc central de POE une masse moléculaire moyenne en nombre de 35000 g/mol.

8. Copolymère selon l'une quelconque des revendications précédentes, **caractérisé en ce qu'**il s'agit du copolymère P(STFSILi)-*b*-POE-*b*-P(STFSILi), dans lequel chacun des blocs PSTFSILi présente une masse moléculaire moyenne en nombre d'environ 4900 g/mol et le bloc central de POE une masse moléculaire moyenne en nombre de 35000 g/mol, le bloc POE représentant 78% en masse de la masse totale du copolymère.

9. Copolymère selon l'une quelconque des revendications 1 à 6, **caractérisé en ce qu'**il s'agit du copolymère P(MMASTFSILi-stat-APEG)-*b*-POE-*b*-P(MMATFSILi-stat-APEG), dans lequel les blocs B sont des copolymères statistiques de méthacrylate de TFSILi et d'acrylate de polyéthylèneglycol dans lesquels chacun des blocs P(MMATFSILi-stat-APEG) présente une masse moléculaire moyenne en nombre de 7500 g/mol et le bloc central de POE une masse moléculaire moyenne en nombre de 35000 g/mol, le bloc POE représentant 70% en masse de la masse totale du copolymère.

10. Utilisation d'au moins copolymère di-bloc de type BA ou tri bloc de type BAB tel que défini à l'une quelconque des revendications précédentes, à titre d'électrolyte solide dans une batterie au lithium.

11. Utilisation selon la revendication 10, à titre d'électrolyte solide dans une batterie au lithium métal.

12. Electrolyte polymère solide, **caractérisé en ce qu'**il comprend au moins un copolymère di-bloc de type BA ou tri bloc de type BAB tel que défini à l'une quelconque des revendications 1 à 9.

13. Electrolyte selon la revendication 12, **caractérisé en ce qu'**il comprend en outre un plastifiant choisi parmi un carbonate ou un mélange de carbonates choisis parmi le propylène carbonate, l'éthylène carbonate et le diméthylcarbonate, du succinonitrile, du tetraéthylsulfonamide.

14. Cellule d'une batterie rechargeable au lithium comprenant une anode en lithium métallique et une cathode comprenant au moins un composé actif d'électrode positive choisi parmi les composés à insertion des ions lithium entre lesquelles se trouve un électrolyte polymère solide, **caractérisée en ce que** ledit électrolyte polymère solide est un électrolyte selon la revendication 12 ou 13.

15. Cellule selon la revendication 14, **caractérisés en ce que** sa température de fonctionnement est de 60 à 100°C.

16. Cellule selon la revendication 14 ou 15, **caractérisée en ce que** le matériau actif d'électrode positive est LiFePO₄.

17. Cellule selon l'une quelconque des revendications 14 à 16, **caractérisée en ce que** la quantité de matériau actif d'électrode positive/cm²/face est supérieur à 0,6 mAh/cm².

18. Cellule selon l'une quelconque des revendications 14 à 17, **caractérisée en ce que** l'électrode positive comprend en outre un agent générant une conductivité électrique.

19. Cellule selon l'une quelconque des revendications 14 à 18, **caractérisée en ce que** l'électrode positive comprend en outre au moins un copolymère tel que défini à l'une quelconque des revendications 1 à 9.

20. Cellule selon l'une quelconque des revendications 1 à 19, **caractérisée en ce que** les proportions massiques de l'électrode positive sont les suivantes : matériau actif d'électrode positive/électrolyte polymère solide/carbone : 60/32/8.

## Patentansprüche

1. Diblock-Copolymer vom Typ BA oder Tribock-Copolymer vom Typ BAB, **dadurch gekennzeichnet, dass** :
- der Block A eine nicht substituierte Polyoxyethylenkette mit einer zahlenmäßig durchschnittlichen molaren Masse unter oder gleich 100 kDa ist
- der Block B ein anionisches Polymer ist, das aus einem oder mehreren Monomeren herstellbar ist, die aus dem Vinylmonomeren und Derivaten ausgewählt sind, wobei die Monomere durch ein (Trifluormethylsulfonyl)imid-Anion (TFSI) der folgenden Formel substituiert sind: 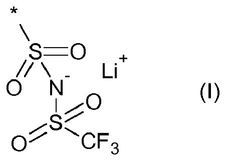 in welcher * den Anlagerungspunkt des Anions der Formel (I) an das Monomer mittels einer kovalenten Bindung oder einer linearen Alkylkette mit 1 bis 5 Kohlenstoffatomen darstellt.

2. Copolymer nach Anspruch 1, **dadurch gekennzeichnet, dass** der Block A 225 bis 2250 Ethylenoxidmotive umfasst.

3. Copolymer nach Anspruch 1 oder 2, **dadurch gekennzeichnet, dass** die molekulare Masse des Blocks A von 10 bis 50 kDA schwankt.

4. Copolymer nach einem der vorangehenden Ansprüche, **dadurch gekennzeichnet, dass** die den oder Blöcke B bildenden Vinylmonomere aus dem Lithium-styrol-sulfonyl(trifluormethylsulfonyl)imid, dem Lithium-sulfonyl(trifluormethylsulfonyl)imidacrylat, dem Lithium-sulfonyl(trifluormethylsulfonyl)imidmethacrylat, dem Lithium-sulfonyl(trifluormethylsulfonyl)imidacrylamid, dem Lithium-sulfonyl(trifluormethylsulfonyl)imidmethacrylamid, dem Lithium-ethylen-sulfonyl(trifluormethylsulfonyl)imid, dem Lithium-propylen-sulfonyl(trifluormethylsulfonyl)imid, dem Lithium-dien-sulfonyl(trifluormethylsulfonyl)imid und dem Lithium-maleimid-sulfonyl(trifluormethylsulfonyl)imid ausgewählt sind.

5. Copolymer nach einem der Ansprüche 1 bis 4, **dadurch gekennzeichnet, dass** der Block B aus der Copolymerisierung von mindestens einem Vinylmonomer nach Anspruch 4 und von mindestens einem Monomer, ausgewählt aus dem Styrol, einem Poly(ethylenglycol)acrylat und einem Alkylacrylat, in dem die Alkylgruppe 1 bis 16 Kohlenstoffatome aufweist, resultiert.

6. Copolymer nach einem der vorangehenden Ansprüche, **dadurch gekennzeichnet, dass** es ausgewählt ist aus:
i) den Triblock-Copolymeren vom Typ P(STFSILi)-*b*-POE-*b*-P(STFSILi), in welchen das Verhältnis P(STFSILi)/POE von 10 bis 40 Ma% schwankt,
ii) den Triblock-Copolymeren vom Typ P(MMATFSILi-stat-APEG)-*b-*PEO-*b*-P(MMATFSILi-stat-APEG), in welchen die B-Blöcke statistische TFSILi-Methacrylat- und Polyethylenglycol-Acrylat-Copolymere sind, in welchen das Verhältnis P(MMATFSILi-stat-APEG)/POE von 10 bis 40 Ma% schwankt.

7. Copolymer nach einem der vorangehenden Ansprüche, **dadurch gekennzeichnet, dass** es aus den Copolymeren P(STFSILi)-*b*-POE-*b*P(STFSILi) ausgewählt ist, in denen jeder der Blöcke PSTFSILi eine zahlenmäßig durchschnittliche molare Masse, die von 2000 bis 7500 g/mol schwankt, und der zentrale Block POE eine zahlenmäßig durchschnittliche molare Masse von 35000 g/mol aufweist.

8. Copolymer nach einem der vorangehenden Ansprüche, **dadurch gekennzeichnet, dass** es sich um das Copolymer P(STFSILi)-*b*-POE-*b*P(STFSILi) handelt, in welchem jeder der Blöcke PSTFSILi eine zahlenmäßig durchschnittliche molare Masse von zirka 4900 g/mol und der zentrale Block POE eine zahlenmäßig durchschnittliche molare Masse von 35000 g/mol aufweist, wobei der Block POE 78 Ma% der Gesamtmasse des Copolymers darstellt.

9. Copolymer nach einem der Ansprüche 1 bis 6, **dadurch gekennzeichnet, dass** es sich um das Copolymer P(MMASTFSILi-stat-APEG)-b-POE-*b*-P(MMATFSILi-stat-APEG) handelt, in welchem die Blöcke B statistische TFSILi-Methacrylat- und Polyethylenglycol-Acrylat-Copolymere sind, in denen jeder der Blöcke P(MMATFSILi-stat-APEG) eine zahlenmäßig durchschnittliche molare Masse von 7500 g/mol und der zentrale Block POE eine zahlenmäßig durchschnittliche molare Masse von 35000 g/mol aufweist, wobei der Block POE 70 Ma% der Gesamtmasse des Copolymers darstellt.

10. Verwendung von mindestens Diblock-Copolymer vom Typ BA oder Triblock-Copolymer vom Typ BAB nach einem der vorangehenden Ansprüche als fester Elektrolyt in einer Lithiumbatterie.

11. Verwendung nach Anspruch 10 als fester Elektrolyt in einer Lithiummetallbatterie.

12. Fester Polymerelektrolyt, **dadurch gekennzeichnet, dass** er mindestens ein Diblock-Copolymer vom Typ BA oder Triblock-Copolymer vom Typ BAB nach einem der Ansprüche 1 bis 9 umfasst.

13. Elektrolyt nach Anspruch 12, **dadurch gekennzeichnet, dass** er ferner einen Plastifikator, ausgewählt aus einem Carbonat oder einem Gemisch aus Carbonaten, ausgewählt aus dem Propylencarbonat, dem Ethylenecarbonat und dem Dimethylcarbonat, Succinonitril, Tetraethylsulfonamid umfasst.

14. Zelle einer wiederaufladbaren Lithiumbatterie, die eine metallische Lithiumanode und eine Kathode umfasst, die mindestens eine aktive Verbindung einer positiven Elektrode umfasst, die aus den Verbindungen mit Lithiumioneninsertion ausgewählt ist, zwischen denen sich ein fester Polymerelektrolyt befindet, **dadurch gekennzeichnet, dass** der feste Polymerelektrolyt ein Elektrolyt nach Anspruch 12 oder 13 ist.

15. Zelle nach Anspruch 14, **dadurch gekennzeichnet, dass** ihre Betriebstemperatur 60 bis 100 °C beträgt.

16. Zelle nach Anspruch 14 oder 15, **dadurch gekennzeichnet, dass** das aktive positive Elektrodenmaterial LiFePO₄ ist.

17. Zelle nach einem der Ansprüche 14 bis 16, **dadurch gekennzeichnet, dass** die Menge aktiven positiven Elektrodenmaterials/cm²/Fläche größer als 0,6 mAh/cm² ist.

18. Zelle nach einem der Ansprüche 14 bis 17, **dadurch gekennzeichnet, dass** die positive Elektrode ferner ein Mittel umfasst, das eine elektrische Leitfähigkeit erzeugt.

19. Zelle nach einem der Ansprüche 14 bis 18, **dadurch gekennzeichnet, dass** die positive Elektrode ferner mindestens ein Copolymer nach einem der Ansprüche 1 bis 9 umfasst.

20. Zelle nach einem der Ansprüche 1 bis 19, **dadurch gekennzeichnet, dass** die Massenverhältnisse der positiven Elektrode folgende sind: aktives Material der positiven Elektrode / fester Polymerelektrolyt / Kohlenstoff: 60/32/8.

## Claims

1. A diblock copolymer of the BA type or a triblock copolymer of the BAB type, **characterized in that**:
- block A is an unsubstituted polyoxyethylene chain having a number-average molecular weight less than or equal to 100 kDa;
- block B is an anionic polymer that can be prepared from one or more monomers selected from the vinyl monomers and derivatives thereof, said monomers being substituted with an anion (trifluoromethylsulfonyl)imide (TFSI) of the following formula: 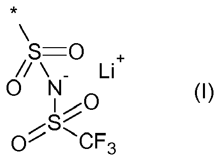 in which * represents the point of attachment of said anion of formula (I) to said monomer via a covalent bond or a linear alkyl chain having from 1 to 5 carbon atoms.

2. The copolymer as claimed in claim 1, **characterized in that** block A comprises from 225 to 2250 ethylene oxide units.

3. The copolymer as claimed in claim 1 or 2, **characterized in that** the molecular weight of block A is in the range from 10 to 50 kDA.

4. The copolymer as claimed in any one of the preceding claims, **characterized in that** the vinyl monomers constituting block or blocks B are selected from lithium styrene-sulfonyl(trifluoromethylsulfonyl)imide, lithium sulfonyl(trifluorometlrylsulfonyl)imide acrylate, lithium sulfonyl(trifluoromethylsulfonyl)imide methacrylate, lithium sulfonyl(trifluoromethylsulfonyl)imide acrylamide, lithium sulfonyl(trifluoromethylsulfonyl)imide methacrylamide, lithium ethylene-sulfonyl(trifluoromethylsulfonyl)imide, lithium propylene-sulfonyl(trifluoromethylsulfonyl)imide, the lithium sulfonyl(trifluoromethylsulfonyl)imide dienes, and lithium maleimide-sulfonyl(trifluoromethylsulfonyl)imide.

5. The copolymer as claimed in any one of claims 1 to 4, **characterized in that** block B results from the copolymerization of at least one vinyl monomer as defined in claim 4 and of at least one monomer selected from styrene, a poly(ethylene glycol) acrylate and an alkyl acrylate in which the alkyl group comprises from 1 to 16 carbon atoms.

6. The copolymer as claimed in any one of the preceding claims, **characterized in that** it is selected from:
i) the triblock copolymers of the type P(STFSILi)-*b*-PEO-*b*-P(STFSILi) in which the ratio P(STFSILi)/PEO is in the range from 10 to 40 wt%;
ii) the triblock copolymers of the type P(MMATFSILi-stat-PEGA)-*b*-PEO-*b*-P(MMATFSILi-stat-PEGA) in which blocks B are random copolymers of TFSILi methacrylate and of polyethylene glycol acrylate in which the ratio P(MMATFSILi-stat-PEGA)/PEO is in the range from 10 to 40 wt%.

7. The copolymer as claimed in any one of the preceding claims, **characterized in that** it is selected from the P(STFSILi)-*b*-PEO-*b*-P(STFSILi) copolymers, in which each of the PSTFSILi blocks has a number-average molecular weight in the range from 2000 to 7500 g/mol and the central PEO block has a number-average molecular weight of 35 000 g/mol.

8. The copolymer as claimed in any one of the preceding claims, **characterized in that** it is the copolymer P(STFSILi)-*b*-PEO-*b*-P(STFSILi), in which each of the PSTFSILi blocks has a number-average molecular weight of about 4900 g/mol and the central PEO block has a number-average molecular weight of 35 000 g/mol, the PEO block representing 78 wt% of the total weight of the copolymer.

9. The copolymer as claimed in any one of claims 1 to 6, **characterized in that** it is the copolymer P(MMASTFSILi-stat-PEGA)-*b*-PEO-*b*-P(MMATFSILi-stat-PEGA), in which blocks B are random copolymers of TFSILi methacrylate and of polyethylene glycol acrylate in which each of the P(MMATFSILi-stat-PEGA) blocks has a number-average molecular weight of 7500 g/mol and the central PEO block has a number-average molecular weight of 35 000 g/mol, the PEO block representing 70 wt% of the total weight of the copolymer.

10. The use of at least diblock copolymer of the BA type or triblock copolymer of the BAB type as defined in any one of the preceding claims, as solid electrolyte in a lithium battery.

11. The use as claimed in claim 10, as solid electrolyte in a lithium metal battery.

12. A polymer solid electrolyte, **characterized in that** it comprises at least one diblock copolymer of the BA type or triblock copolymer of the BAB type as defined in any one of claims 1 to 9.

13. The electrolyte as claimed in claim 12, **characterized in that** it further comprises a plasticizer selected from a carbonate or a mixture of carbonates selected from propylene carbonate, ethylene carbonate and dimethyl carbonate, succinonitrile, tetraethylsulfonamide.

14. A cell of a rechargeable lithium battery comprising an anode of metallic lithium and a cathode comprising at least one positive electrode active compound selected from the lithium ion insertion compounds between which there is a polymer solid electrolyte, **characterized in that** said polymer solid electrolyte is an electrolyte as claimed in claim 12 or 13.

15. The cell as claimed in claim 14, **characterized in that** its operating temperature is from 60 to 100°C.

16. The cell as claimed in claim 14 or 15, **characterized in that** the positive electrode active material is LiFePO₄.

17. The cell as claimed in any one of claims 14 to 16, **characterized in that** the amount of positive electrode active material/cm²/face is above 0.6 mAh/cm²-.

18. The cell as claimed in any one of claims 14 to 17, **characterized in that** the positive electrode further comprises an agent generating electrical conductivity.

19. The cell as claimed in any one of claims 14 to 18, **characterized in that** the positive electrode further comprises at least one copolymer as defined in any one of claims 1 to 9.

20. The cell as claimed in any one of claims 1 to 19, **characterized in that** the proportions by weight of the positive electrode are as follows: positive electrode active material/polymer solid electrolyte/carbon: 60/32/8.
